# EUROPÄISCHE PATENTANMELDUNG

(11) **EP 1 760 428 A1**
(43) Veröffentlichungstag der Anmeldung: **07.03.2007**
(21) Anmeldenummer: 05108174.3
(22) Anmeldetag: 06.09.2005
(51) Int. Cl.: G01C 15/00, A63C 19/06

(54) **Referenzstrahlgenerator und System zur Erzeugung von Leitstrahlen für Markierwagen**

(71) Anmelder: Leica Geosystems AG, 9435 Heerbrugg (CH)
(72) Erfinder: Walser, Bernd, 9435 Heerbrugg (CH); Braunecker, Bernhard, 9445 Rebstein (CH); Kipfer, Peter, 9437 Marbach (CH); Betschon, Christian, 9410 Heiden (CH)
(74) Vertreter: Büchel, Kaminski & Partner

(57) **Zusammenfassung**

Ein Referenzstrahlgenerator (1) zur Führung eines Markierwagens für bodengebundene Markierungen weist ein gegenüber der Erdoberfläche definiert positionierbares Trägerelement (11), eine Laserdiode und Strahlführungsmittel zur Emission der Strahlung (LS) auf wenigstens ein Referenzziel (4) auf, wobei die Strahlung (LS) mit einem asymmetrischen Strahlquerschnitt (5), insbesondere fächerförmig, emittiert wird und die Strahlführungsmittel bezüglich des Trägerelements (11) definiert verstellbar sind. Durch eine optische Erfassungskomponente zur Erfassung und Bereitstellung der von dem Referenzziel reflektierten Strahlung, insbesondere ein Teleskop (12), kann eine Ausrichtung der Strahlung (LS) auf das Referenzziel (4) erfolgen.

## Beschreibung

Die Erfindung betrifft einen Referenzstrahlgenerator für zur Führung eines Markierwagens zur Erzeugung bodengebundener Markierungen nach dem Oberbegriff des Anspruchs 1 und ein System zur Erzeugung von Leitstrahlen für einen Markierwagen nach Anspruch 11.

Zum Markieren von Sportfeldern ist es heute üblich, das Sportfeld genau auszumessen, abzustecken und mit einem Markierwagen abzufahren und zu markieren. Der Markierwagen weist einen Auslass für eine Markiersubstanz auf. In dieser Weise durchgeführte Markierungen sind ausgesprochen zeit-und auch kostenaufwendig, wenn sie von einer oder mehreren Arbeitspersonen durchgeführt werden. Die Arbeitspersonen müssen erst das gesamte - meist sehr grosse - Sportfeld abmessen und abstecken und dann das Feld mit dem Markierwagen abfahren. Die Positions-Genauigkeit der Markierung hängt dabei von der Führung des Wagens durch die Arbeitsperson ab. Zudem ergeben sich bei dieser Art von Markierarbeiten oft Abweichungen von den gewünschten Markierpositionen.

Eine Verbesserung der Markierarbeiten in Hinblick auf Genauigkeit, Zeitbedarf und Handhabungsfreundlichkeit bietet die Verwendung von optischen Leitstrahlen, die von einem Basissystem erzeugt werden und an durch die ein Markierwagen geführt werden kann.

Ein solches System wird beispielsweise in der britischen Patentanmeldung mit der Anmeldenummer 0417517.0 beschrieben. Durch eine Laserdiode und eine Optik wird ein Strahl mit fächerförmiger Geometrie und elliptischem Strahlquerschnitt erzeugt. Dieser Strahl wird zur Festlegung einer Seite eines Sportfeldes emittiert. Der zur Ausbringung der Markiersubstanz verwendete Markierwagen weist einen Detektor für die Laserstrahlung auf, wobei die Position des Markierwagens relativ zum vertikal orientierten Strahl angezeigt wird. Der Benutzer des Wagens kann diesen anhand des Laserfächers als Leitstrahl führen.

Die Ausbringung von Spielfeldmarkierungen mit solchen Systemen ist naturgemäss abhängig von der Handhabbarkeit und Genauigkeit des Leitstrahls. Dessen Positionierung und Lage im Raum kann sich dabei an verschiedenen Bezugsgrössen orientieren. Zumeist wird als ein Fixpunkt des zu markierenden Spielfeldes eine Ecke des Sportfeldes gewählt. Je nach Sportart, örtlichen Gegebenheiten und weiteren Umständen, wie z.B. Regelanforderungen, werden dann die Markierungen mit Bezug zu anderen Grössen definiert. Diese können beispielsweise bereits markierte Ecken eines Spielfeldes, Pfosten von Toren oder bereits vorhandene Grundlinien sein. Je nach Bedingungen können hierbei geringfügige Abweichungen von Idealmassen, z.B. durch schiefwinklige Spielfelder, entstehen.

Um eine entsprechend angepasste Markierung zu definieren, wird der emittierte Strahl zumeist bezüglich eines an einem Referenzpunkt positionierten Referenzzieles ausgerichtet.

Aufgabe der Erfindung ist es, ein System bzw. Systemkomponenten bereitzustellen, die eine vereinfachte und genauere Festlegung von Leitstrahlen für Markierwagen erlauben.

Eine weitere Aufgabe der Erfindung ist es, ein solches System bzw. Systemkomponenten mit grosser Reichweite, d.h. auch für grosse zu markierende Spielfelder bereitzustellen.

Diese Aufgaben werden erfindungsgemäss durch die Gegenstände der Ansprüche 1 und 11 bzw. der abhängigen Ansprüche gelöst oder die Lösungen weitergebildet.

Die Erfindung stellt eine Lösung bereit, die ein schnelleres, vereinfachtes und genaueres Markieren von - insbesondere - Sportfeldern ermöglicht, indem das händische Abstecken eines Feldes durch ein "Abstecken" mittels einer Lasersendeeinheit ersetzt wird, indem die Sendeeinheit eine Ebene aufspannt, an welcher sich eine Markiereinrichtung orientieren kann.

Dazu ist vorgesehen, die Lasersendeeinheit an einer geeigneten Ausgangsposition für ein Sportfeld zu positionieren - z.B. in der Ecke eines Fussballfeldes. Von der Sendeeinheit wird in wenigstens eine Richtung ein Laser-Fächerstrahl ausgesandt, vorzugsweise werden aber zwei zueinander rechtwinklige Fächerstrahlen ausgesandt. Diese Laser-Fächer spannen Ebenen senkrecht auf das zu markierendes Feld und als Referenz ("Absteckung") für zu markierende Linien auf. Durch so aufgespannte Fächer-Ebenen wird das Sportfeld - teilweise - definiert, sozusagen optisch - teilweise - abgesteckt.

Die Lasersendeeinheit umfasst einen Laser und einen Strahlaufweiter zur Erzeugung eines Laserfächers, vorzugsweise auch eine weitere optische Komponente - z.B. ein Pentaprisma - zum Aufspalten des Laserfächers in zwei Teilfächer und ist so ausgebildet, dass sie an einer definierten Position fixierbar ist, beispielsweise anhand eines Stativs oder einer Trägerplatte. Im Allgemeinen wird der einen Fächerstrahl emittierende Laser auf einer rechtwinkligen Winkelplatte mit zwei Schenkeln montiert, und zwar derart, dass er den Laserstrahl in einem definierten Abstand zu einer zu markierenden Linie, entsprechend den baulichen Gegebenheiten des genutzten Markierwagens, emittiert. Der Detektor des Markierwagens ist vorzugsweise als Linear- oder Flächen-Array von Photodioden ausgebildet, welcher Array vorteilhaft auf der Steuereinheit quer zur durch die Lasersendeeinheit des Referenzstrahlgenerators aufgespannten Laserlicht-Ebene angeordnet ist.

Mittels des photosensitiven Detektors werden die Lasersignale der Lasersendeinheit detektiert bzw. wird die (Ist-) Relativposition des Detektors bzw. des Markierwagens zur Laser-Ebene festgestellt. Wird dabei vom Detektor festgestellt, dass die Ist-Position von einer Soll-Position abweicht (d.h. z.B. dass der Detektor kein Signal oder ein Signal an der falschen Stelle empfängt), wird diese Information entsprechend verarbeitet. Dabei kann beispielsweise eine Anzeigeneinheit auf dem Markierwagen angebracht sein, die die Position des Detektors bzw. des Wagens gegenüber der Laserebene anzeigt, z.B. mittels unterschiedlicher Anzeigelampen. Insbesondere wird aber bei Feststellen einer Abweichung von der durch den Laser-Fächer aufgespannten Ebene eine Steueranweisung an die Ausbringungseinheit weitergegeben bzw. die Ausbringungseinheit der festgestellten Abweichung entsprechend gesteuert. Diese Steuerung kann auf unterschiedliche Art und Weise, z.B. auch vollautomatisch, erfolgen.

Vorteilhafterweise ist der Referenzstrahlgenerator mit seiner Grundplatte - oder einem anderem Trägerelement als Halte- oder Positionierelement - so ausgebildet, dass er von einer Arbeitsperson getragen werden kann.

Beim erfindungsgemässen Erzeugen bodengebundener Markierungen - z.B. für ein Sportfeld, ein Muster, eine Schrift, usw. - wird also folgendermassen vorgegangen: Eine Lasersendeeinheit wird - z.B. an einer Ecke des Feldes - positioniert. Zur räumlichen Festlegung des Leitstrahls für den Markierwagen wird die emittierte Strahlung auf ein Referenzziel gerichtet und so bezüglich des Referenzziels verstellt, dass eine definierte Ausrichtung, d.h. Position und Orientierung, auf dem Referenzziel erreicht wird. Falls bereits Elemente des zu bearbeitenden Feldes oder andere Bezugspunkte, wie z.B. Torpfosten auf einem Fussballfeld, vorhanden sind, kann über die Positionierung des Referenzziels eine Ausrichtung an diesen Objekten erfolgen. Die Sendeeinheit emittiert einen Laserstrahl, vorzugsweise einen fächerförmig aufgeweiteten Strahl, der eine Ebene festlegt, wobei diese Ebene anhand der Reflektion auf dem Referenzziel festgelegt wird.

Dabei werden der asymmetrische, insbesondere elliptische oder streifenförmige, Strahlquerschnitt und ein entsprechend ausgeformter reflektierender Bereich des Referenzziels zur Deckung gebracht. Erfindungsgemäss kann die Reflektion auf dem Referenzziel durch eine optische Komponente, wie z.B. ein Fernrohr bzw. Teleskop, betrachtet werden. Durch Verstellelemente wird die Ausrichtung der Emission solange verstellt, bis Strahlquerschnitt und reflektierender Bereich des Referenzziels zur Deckung gebracht worden sind. Durch die angepasste Gestaltung des reflektierenden Bereichs wird beim Erreichen der Überdeckung auch die maximale Intensität der Reflektion erreicht, so dass eine gute visuelle Erkennbarkeit folgt und auch eine Automatisierbarkeit möglich wird. Die Verstellung der Emissionsrichtung kann dabei mehrstufig erfolgen. Der gesamte Referenzstrahlgenerator kann zuerst mit seinem Trägerelement bezüglich der Erdoberfläche grob justiert, z.B. horizontiert, werden. Es kann aber auch als Emissionsausrichtung der von der Lasersendeeinheit ausgesandten Strahlung bzw. des Laserfächers eine nicht vertikale Orientierung zur Boden-Markierebene bzw. der Erdoberfläche oder eine nicht horizontierte Emission, z.B. bei ansteigendem, abfallendem oder welligem Gelände, gewählt werden. Eine feinere Verstellung kann dann über mechanische Feintriebe oder elektrische bzw. optische Komponenten bewirkt werden. Dabei kann der Verstellvorgang auch über Motoren unterstützt bzw. automatisiert werden.

Störende Hintergrundstrahlung kann durch die Verwendung von Filtern, die nur für den emittierten Spektralbereich durchlässig sind, unterdrückt werden.

Aufgrund der geometrischen Bedingungen der meisten Sportfelder ist eine gleichzeitige Erzeugung und Festlegung von zwei oder mehr Strahlen bzw. Teilstrahlen vorteilhaft, da so ohne Umstellen des Referenzstrahlgenerators zwei Leitstrahlen genutzt werden können. Erfindungsgemäss kann dies durch mehrere Strahlquellen oder eine Strahlteilung erfolgen, die Aufteilung kann dabei z.B. in Transmission oder Reflektion erfolgen. In einer erfindungsgemässe Ausführungsform wird eine gemeinsame Strahlquelle und zur nachfolgenden Teilung ein Pentaprisma genutzt. Damit können für die meisten rechtwinkligen Spielfelder zwei Aussenlinien definiert werden. In der Realität kann es jedoch zu Abweichungen von dieser Geometrie kommen, wenn z.B. das Spielfeld anhand der Torpfosten festgelegt werden muss und die Toren nicht exakt parallel orientiert sind. Um solche schiefwinkligen Spielfelder ebenfalls markieren zu können, kann der Emissionswinkel der zwei oder mehr Teilstrahlen einstellbar gestaltet werden, z.B. durch einen verstellbaren Justagekeil.

An dem so durch Referenzstrahlgenerator und Referenzziel festgelegten Leitstrahl bzw. den mehreren Leitstrahlen kann sich ein Markierfahrzeug, welches z.B. von einer Arbeitsperson geschoben wird, orientieren. Die Orientierung des Geräts am Laserstrahl erfolgt über die Detektion des Leitstrahls auf einem Detektor des Geräts, vorzugsweise ein Photodioden- Zeilen- oder Flächenarray. Empfängt der Detektor ein falsches Signal, kann er z.B. die Information "zu weit links" bzw. "zu weit rechts" vermitteln, z.B. indem Alarmlampen aufleuchten. Weiters kann die Position des Auslasses des Markierfahrzeugs so lange korrigiert werden, bis der Detektor wieder das "richtige" Signal empfängt.

Ein erfindungsgemäßer Referenzstrahlengenerator und ein erfindungsgemässes System werden nachfolgend anhand von in der Zeichnung schematisch dargestellten Ausführungsbeispielen rein beispielhaft näher beschrieben. Im einzelnen zeigen
- Fig.1: die schematische Erläuterung von Verfahren zur Markierung von Sportfeldern;
- Fig.2: die schematische Darstellung des erfindungsgemässen Systems;
- Fig.3: die figürliche Darstellung eines Ausführungsbeispiels für einen erfindungsgemässen Referenzstrahlgenerator;
- Fig.4-7: die figürliche Darstellung von Komponenten des Ausführungsbeispiels für einen erfindungsgemässen Referenzstrahlgenerator und
- Fig.8: die schematische Darstellung der Strahlaufteilung durch ein Pentaprisma für das Ausführungsbeispiel.

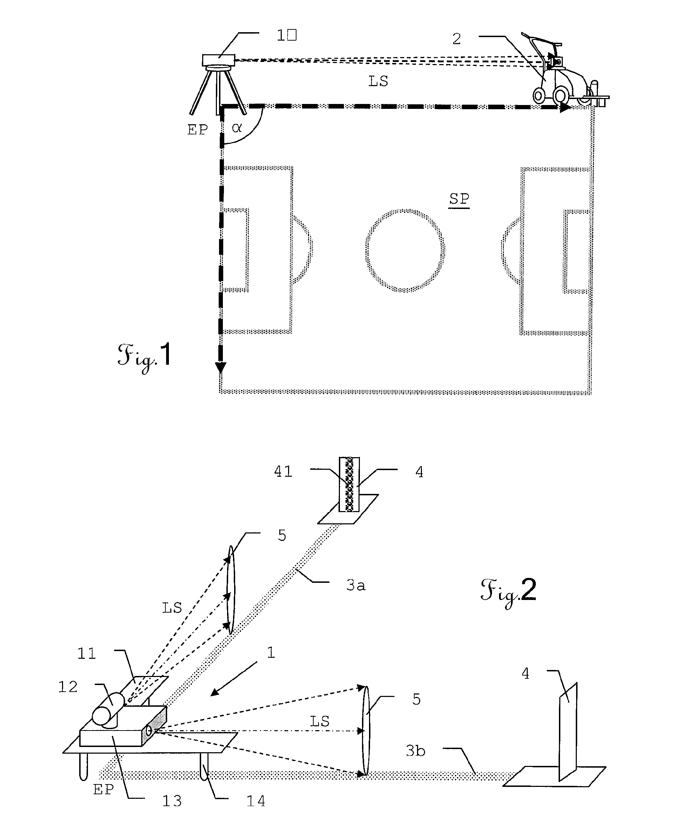

Fig.1 erläutert ein beispielhaftes Verfahren zur Markierung von Sportfeldern nach dem Stand der Technik mit einer Steuerung eines Markierwagens 12 unter Verwendung eines Referenzstrahlengenerators 1'. Dargestellt wird eine Situation, bei der ein Spielfeld SP mit gattungsgemäßen Markierungen versehen werden soll. Dabei erfolgt die Vorgabe der zu markierenden Linie über einen von einem Bearbeiter zu bedienenden, auf einem Eckpunkt EP abgesetzt positionierten Referenzstrahlengenerator 1'. Der Markierwagen 2 wird über die Emission des Referenzstrahlgenerator 1' als Leitstrahl LS und optische Verbindung geführt. Zur Markierung einer Bearbeitungslinie, die eine Seite des Spielfeldes SP festlegt, muss der Markierwagen 2 mit seiner Empfänger zu einer Linie geführt werden, an der der Leitstrahl empfangen werden kann. Diese ist in diesem Beispiel nicht mit der Bearbeitungslinie deckungsgleich, da aufgrund des räumlichen Abstands zwischen Bearbeitungselementen und der Empfängerachse ein Versatz erforderlich ist, um die Markierung korrekt aufzubringen. Die Elektronik des Markierwagens 2 steuert diesen nun so bzw. zeigt entsprechende Korrekturen für den Nutzer an, dass die Abweichung zwischen Leitstrahl LS und Empfängerachse innerhalb einer vorgegebenen Abweichung gehalten wird. Durch die Festlegung des Leitstrahls LS kann somit der Markierwagen 2 mit der Empfängerachse auf einer Sollinie geführt werden, so dass eine Aufbringung der Markierung möglich ist.

Sollen nun mehrere mit einem Winkel α zueinander gelegene Linien markiert werden, so muss bei Verfahren des Stands der Technik die Emission des Referenzstrahlgenerators 1' neu ausgerichtet werden, um einen weiteren Leitstrahl bereitzustellen. Durch sukzessive Neuausrichtung von Leitstrahlen LS kann schliesslich das gesamte Spielfeld SP markiert werden.

Fig.2 zeigt die schematische Darstellung des erfindungsgemässen Systems mit dem Zusammenwirken seiner Komponenten. Von einem erfindungsgemässen Referenzstrahlgenerator 1 werden zwei Leitstrahlen LS unter einem vordefinierten Winkel, z.B. von 90°, in Richtung auf zwei Referenzziele 4 emittiert. Der Referenzstrahlengenerator 1 weist eine L-förmige Basisplatte 11 mit zwei rechtwinklig zueinander orientierten Schenkeln als Trägerelement auf. Auf dieser gegenüber der Erdoberfläche festlegbaren Basisplatte 11 sind die Komponenten des Referenzstrahlengenerators 1 verstellbar montiert, wobei die Basisplatte 11 selbst durch beinartige Positionierelemente 14 zur Grobjustierung des Trägerelements bezüglich der Erdoberfläche verstellt werden kann. In diesem Beispiel wird die Basisplatte 11 gegenüber einem Eckpunkt EP positioniert und dann durch Verstellung der Komponenten eine Feinjustierung vorgenommen. Auf der Basisplatte 11 ist eine Quelle elektromagnetischer Strahlung, z.B. eine Laserdiode, mit Strahlführungsmitteln 13 zur Emission der Strahlung verstellbar angeordnet. Die als Leitstrahl LS emittierte Strahlung weist dabei einen asymmetrischen, hier exemplarisch elliptisch dargestellten Strahlquerschnitt 5 auf. Der Strahlquerschnitt 5 kann dabei bereits durch einen entsprechenden Querschnitt der Emission der quelle bereitgestellt werden oder aber nach der Erzeugung geformt werden. Hierbei können statische Methoden, wie z.B. durch eine Zylinderlinse als Strahlaufweiter, oder dynamische bzw. zeitabhängige Ansätze, wie z.B. durch eine Bewegung der Quelle oder deren Emission, genutzt werden. So kann z.B. durch ein Scannerrad die Abtastung bzw. Emission in einen linearen, streifenförmigen Bereich bewirkt werden, so dass über die Zeit betrachtet eine fächerförmige Emission erfolgt. Durch eine solche Emission der beiden Leitstrahlen LS kann ein oder mehrere Markierwagen zur Erzeugung von zwei Linien 3a und 3b des Spielfeldes geführt werden, wobei die generierten Fächer der Leitstrahlen LS die Ebenen zur Orientierung und Ausrichtung der Markierwagen bereitstellen.

Dem Strahlquerschnitt 5 entspricht der reflektierende Bereich 41 der Referenzziele 4 in seiner Form bzw. dem Querschnitt, so dass bei einem Übereinstimmen von Strahlquerschnitt 5 und reflektierendem Bereich 41 das Intensitätsmaximum der Reflektion die korrekte Ausrichtung anzeigt. Die Form des reflektierenden Bereichs 41 kann dabei durch die Form des reflektierenden Materials selbst, z.B. eines Streifens einer reflektierenden Folie, oder durch eine entsprechend geformte Abdeckung des reflektierenden Materials, z.B. durch eine Maske mit einem Schlitz, bewirkt werden. Dabei kann das Referenzziel 4 ebenfalls mit einem Referenzträgerelement in zum Referenzstrahlgenerator 1 bzw. dessen Basisplatte 11 ähnlicher Weise ausgebildet werden, z.B. mit zwei Schenkeln in L-Form und verstellbaren Beinen, so dass auch für das Referenzziel 4 entsprechende Verstellmöglichkeiten bestehen.

Die Erfassung der reflektierten Strahlung erfolgt durch eine optische Erfassungskomponente, zur Erfassung und Bereitstellung der von dem Referenzziel 4 reflektierten Strahlung, die hier für die Nutzung des menschlichen Auges als Teleskop 12 ausgebildet ist. Alternativ oder ergänzend kann die optische Erfassungskomponente auch als elektrooptischer Detektor, z.B. als CCD- oder CMOS-Kamera, ausgebildet sein, so dass auch automatische Ausrichtprozesse, z.B. mit Antrieb durch Motoren, möglich sind. Bei einer entsprechenden Intensität der Quelle oder kurzen Entfernungen kann auch auf die optische Erfassungskomponente verzichtet werden bzw. eine Ausrichtung auch ohne deren Nutzung erfolgen.

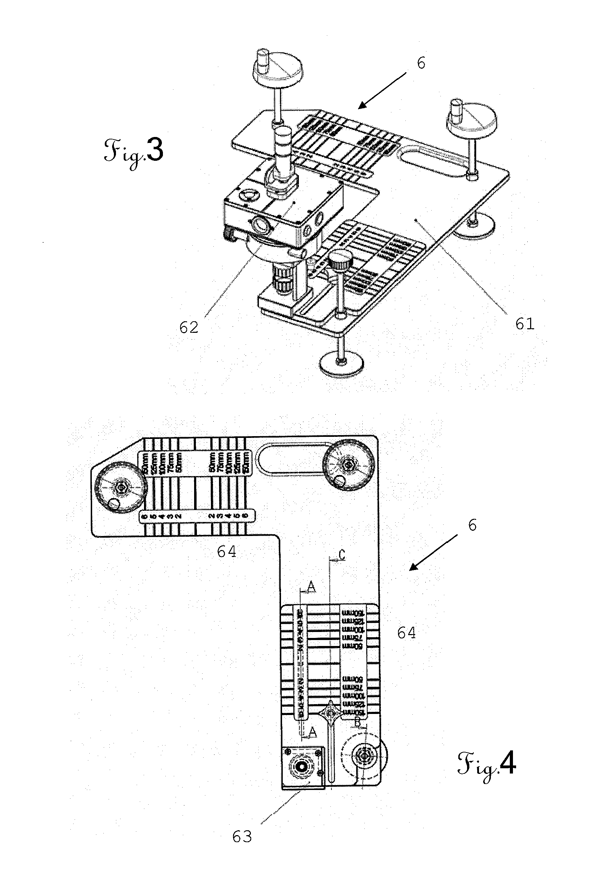

In Fig.3 erfolgt die figürliche Darstellung eines Ausführungsbeispiels für einen erfindungsgemässen Referenzstrahlgenerator 6 mit einer L-förmigen Basisplatte 61 als Trägerelement und einer schwenk- und verschiebbaren Strahleinheit 62 mit Quelle und Strahlführungsmitteln. Eine erläuternde figürliche Darstellung der Komponenten dieses Referenzstrahlgenerators 6 erfolgt in den Fig.4-7.

Fig.4 zeigt die Basisplatte in einer Draufsicht. Auf der Basisplatte ist eine verschiebbare Aufnahme 63 für die Strahleinheit angeordnet, wobei diese Aufnahme 63 zudem eine Rotation der Strahleinheit ermöglicht. Eine erste Justierung der Strahleinheit gegenüber der Erdoberfläche kann durch Verschieben der Aufnahme 63 auf der Basisplatte erfolgen, wobei durch eine Einteilung 64 auf jedem der beiden Schenkel eine Quantifizierung der Bewegung bzw. Position erfolgt.

Die Basisplatte 61 selbst wird vorab bezüglich eines ausgezeichneten Punktes auf der Erdoberfläche positioniert und festgelegt. Eine entsprechende Verstellbarkeit in Höhe und Neigung wird durch drei höhenverstellbare Füsse bzw. beinartige Komponenten 65 bewirkt. Diese weisen auf ihrer Unterseite tellerartige Platten 66 und zumindest bei zwei der beinartigen Komponenten 65 auf der Oberseite eine Verstelltrieb 67 auf. Mit der Basisplatte 61 sind die beinartigen Komponenten 65 durch Durchführungen und Buchsen 68 verbunden.

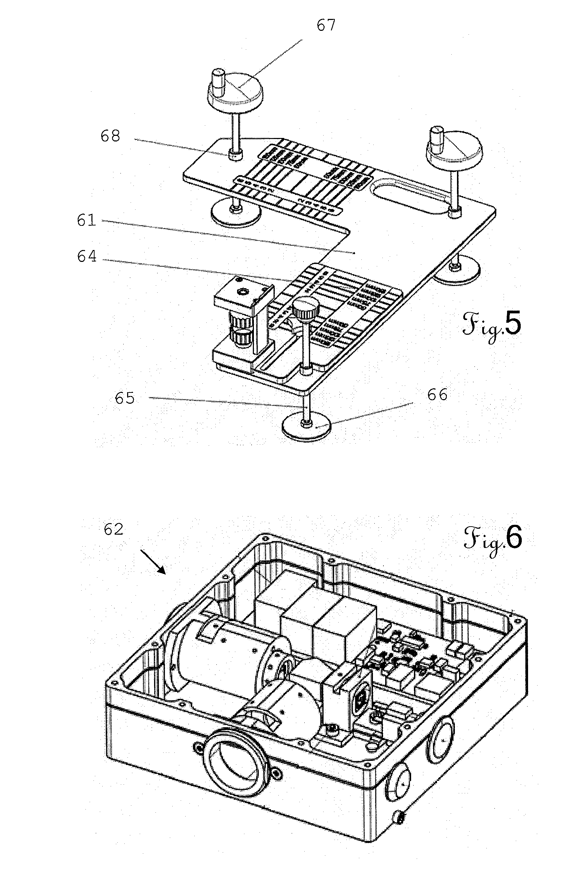

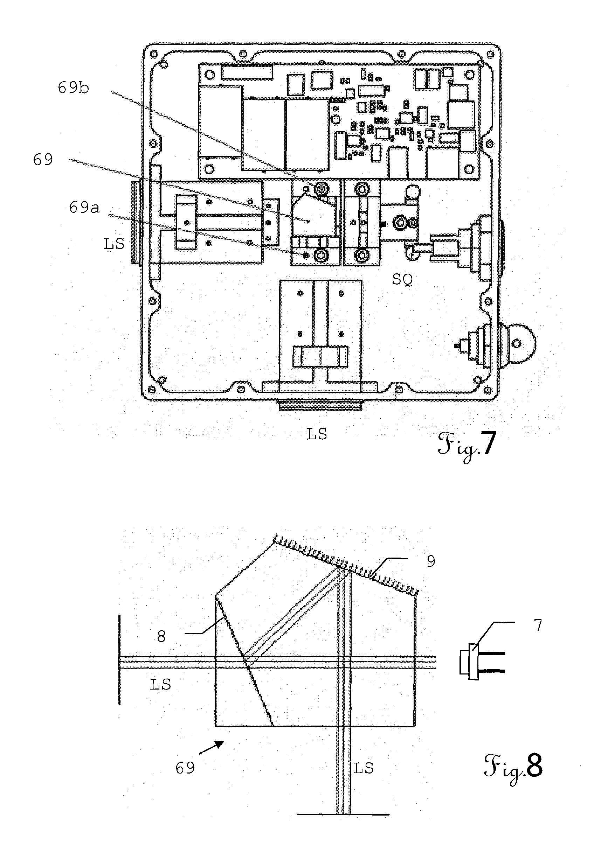

Fig.6 zeigt eine Ansicht der geöffneten Strahleinheit 62 mit den Komponenten von Quelle und Strahlführungsmitteln, welche in Fig.7 in Draufsicht näher erläutert werden. Zur Strahlteilung wird in diesem Beispiel ein Pentaprisma 69 verwendet, das mit einer Halterung 69a und Schrauben 69b in der Strahleinheit fixiert ist. Durch die auf der rechten Seite angeordnete Strahlquelle SQ wird elektromagnetische Strahlung, z.B. Laserlicht generiert und in das Pentaprisma 69 eingekoppelt. Dort erfolgt eine Aufteilung und nachfolgende über zugeordnete Optiken eine Emission als Leitstrahlen LS. Der Winkel der beiden Leitstrahlen zueinander kann beispielsweise durch optische Komponenten kontinuierlich oder in diskreten Schritten variiert werden, z.B. durch verstellbare Spiegel oder optische Keile.

Hierbei erläutert Fig.8 die Strahlaufteilung durch das Pentaprisma 69 schematisch. Die Strahlung der Laserdiode 7 als Strahlungsquelle tritt von der rechten Seite her in das Pentaprisma 69 ein und trifft auf eine halbdurchlässige Fläche 8, so dass Strahlaufteilung im Verhältnis von 50/50 erfolgt und ein Teil als erster Leitstrahl ausgekoppelt wird. Der reflektierte Anteil trifft auf eine Spiegelfläche 9, z.B. auf einen Silberspiegel, und wird schliesslich durch eine Austrittsfläche als zweiter Leitstrahl emittiert. Zusätzlich können alle optischen Durchtrittsflächen reflexmindern bzw. transmissionserhöhend ausgebildet sein, z.B. durch Beschichtungen. Die Winkeleinstellung zwischen beiden Leitstrahlen kann beispielsweise durch einen keil zwischen Pentaprisma 69 und Spiegelfläche 9 erfolgen, wodurch der zweiten Leitstrahl in seiner Richtung verändert wird. Alternativ oder ergänzend können jedoch auch verstellbare Spiegelflächen oder ähnliche optische Komponenten zur Veränderung der Emissionsrichtung verwendet werden.

## Patentansprüche

1. Referenzstrahlgenerator (1,6), insbesondere zur Führung eines Markierwagens (2) zur Erzeugung bodengebundener Markierungen, mit wenigstens
- einem gegenüber der Erdoberfläche definiert positionierbaren, insbesondere veranker- und horizontierbaren, Trägerelement (11,61),
- einer Quelle elektromagnetischer Strahlung (SQ), insbesondere einer Laserdiode (7),
- Strahlführungsmitteln zur Emission der Strahlung auf wenigstens ein Referenzziel (4), wobei die Strahlung mit einem asymmetrischen Strahlquerschnitt (5), insbesondere fächerförmig, emittiert wird und die Strahlführungsmittel bezüglich des Trägerelements (11,61) definiert verstellbar sind,
**gekennzeichnet durch**
eine optische Erfassungskomponente, insbesondere ein Teleskop (12), zur Erfassung und Bereitstellung der von dem Referenzziel (4) reflektierten Strahlung, insbesondere für das menschliche Auge.

2. Referenzstrahlgenerator (1,6) nach Anspruch 1,
**dadurch gekennzeichnet, dass**
durch die Strahlführungsmitteln die Ausrichtung des Strahlquerschnitts (5) gegenüber der Erdoberfläche einstellbar ist, insbesondere mit gegenüber der Erdoberfläche vertikaler Ausrichtung eines elliptischen Strahlquerschnitts (5).

3. Referenzstrahlgenerator (1,6) nach Anspruch 1 oder 2,
**gekennzeichnet durch**
einen Strahlaufweiter zur Erzeugung eines in einer Richtung statisch oder dynamisch aufgeweiteten Strahlquerschnitts (5).

4. Referenzstrahlgenerator (1,6) nach einem der vorangehenden Ansprüche,
**dadurch gekennzeichnet, dass**
die optische Erfassungskomponente einen für die emittierte optische Strahlung durchlässigen optischen Filter aufweist.

5. Referenzstrahlgenerator (1,6) nach einem der vorangehenden Ansprüche,
**dadurch gekennzeichnet, dass**
die Strahlführungsmittel einen Strahlteiler zur Erzeugung von wenigstens zwei Teilstrahlen, insbesondere ein Pentaprisma (69), aufweisen.

6. Referenzstrahlgenerator (1,6) nach Anspruch 5,
**dadurch gekennzeichnet, dass**
der Strahlteiler einen einstellbaren Emissionswinkel der wenigstens zwei Teilstrahlen aufweist, insbesondere durch einen optischen Keil.

7. Referenzstrahlgenerator (1,6) nach einem der vorangehenden Ansprüche,
**gekennzeichnet durch**
einen Feintrieb zur Verstellung der Ausrichtung der Emission, insbesondere mit einer elektrooptischen Erfassungskomponente und einem Motor zur automatisierten Verstellung.

8. Referenzstrahlgenerator (1,6) nach einem der vorangehenden Ansprüche,
**gekennzeichnet durch**
wenigstens ein, insbesondere drei, Positionierelemente (14,65) zur Grobjustierung des Trägerelements (11,61) bezüglich der Erdoberfläche.

9. Referenzstrahlgenerator (1,6) nach einem der vorangehenden Ansprüche,
**dadurch gekennzeichnet, dass**
das Trägerelement (11,61) eine Geometrie mit zwei rechtwinklig angeordneten Schenkeln, insbesondere eine L-förmige Geometrie, aufweist.

10. Referenzstrahlgenerator (1,6) nach Anspruch 9,
**dadurch gekennzeichnet, dass**
Komponenten der Strahlführungsmittel bezüglich der Schenkel längsverschiebbar angeordnet sind.

11. System zur Erzeugung von Leitstrahlen (LS) für Markierwagen (2), insbesondere zur Markierung von Sportfeldern, mit
- einem Referenzstrahlgenerator (1,6) nach einem der Ansprüche 1 bis 10 und
- wenigstens einem Referenzziel (4), wobei das Referenzziel (4) einen reflektierenden Bereich (41) mit asymmetrischem, insbesondere streifenförmigen, Querschnitt aufweist.

12. System nach Anspruch 11,
**dadurch gekennzeichnet, dass**
der reflektierende Bereich (41) als linienförmiger Reflektor oder als Maske mit einem Schlitz vor einem Reflektor ausgebildet ist.

13. System nach Anspruch 11 oder 12,
**dadurch gekennzeichnet, dass**
das Referenzziel (4) ein gegenüber der Erdoberfläche definiert positionierbares, insbesondere veranker- und horizontierbares, Referenzträgerelement aufweist, wobei der reflektierende Bereich (41) gegenüber dem Referenzträgerelement verstellbar ausgebildet ist.
